# EUROPEAN PATENT APPLICATION

(11) **EP 4 353 636 A1**
(43) Date of publication of application: **17.04.2024**
(21) Application number: 22819955.0
(22) Date of filing: 19.04.2022
(51) Int. Cl.: B65G 47/50, B07C 3/10

(54) **ARTICLE SUPPLY SYSTEM AND ARTICLE PROCESSING SYSTEM**

(30) Priority: 09.06.2021 JP 2021096539
(71) Applicant: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: SEZAKI, Kentaro, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/018119
(87) International publication number: WO 2022/259769

(57) **Abstract**

An article supply system according to an embodiment includes an article supply apparatus and a first recognition apparatus. The article supply apparatus reads a first image from a first surface of an article conveyed by a first conveyance path, outputs the first image, and supplies the article to an article sorting apparatus. The first recognition apparatus recognizes sorting information based on the first image and outputs a first recognition result including the recognized sorting information. The article sorting apparatus causes a second conveyance path to convey the article supplied from the article supply apparatus, reads a second image from a second surface of the conveyed article, receives the first recognition result or a second recognition result including sorting information recognized from the second image, and controls sorting of the article based on the first recognition result or the second recognition result.

## Description

### FIELD

Embodiments described herein relate generally to an article supply system and an article processing system.

### BACKGROUND

In recent years, various techniques for automating processing of articles such as packages have been proposed. For example, a loading/unloading apparatus that automates loading and unloading of articles, and a sorting apparatus that sorts articles by destination, are known. The sorting apparatus sorts articles in cooperation with a scanner and a character recognition apparatus. For example, the scanner reads an image of an upper surface of an article conveyed by the sorting apparatus, and the character recognition apparatus recognizes a destination (sorting information) from the read image of the upper surface. The sorting apparatus sorts the article based on the recognized destination.

In the case of manually loading an article, the article is loaded with its destination surface facing up. By this, the destination surface is included in an image read by the scanner, and the subsequent recognition and sorting is correctly executed.

### CITATION LIST

### PATENT LITERATURE

Japanese Patent No. 4125594

### SUMMARY

For example, a supply apparatus automatically loads an article toward such a sorting apparatus; however, the upper surface of the article automatically loaded does not necessarily correspond to the destination surface. In the case where the scanner of the sorting apparatus is set to read an image of an upper surface of an article and an upper surface of an article automatically loaded is not the destination surface, the image read by the scanner does not include a destination, so that the subsequent recognition and sorting cannot be performed correctly. In addition, adding a supply apparatus to such a sorting apparatus requires both cost reduction and performance improvement.

An object of the present invention is to provide an article supply system and an article processing system that achieve both cost reduction and performance improvement.

An article supply system according to an embodiment includes an article supply apparatus and a first recognition apparatus. The article supply apparatus reads a first image from a first surface of an article conveyed by a first conveyance path, outputs the first image, and supplies the article to an article sorting apparatus. The first recognition apparatus recognizes sorting information based on the first image and outputs a first recognition result including the recognized sorting information. The article sorting apparatus causes a second conveyance path to convey the article supplied from the article supply apparatus, reads a second image from a second surface of the conveyed article, receives the first recognition result or a second recognition result including sorting information recognized from the second image, and controls sorting of the article based on the first recognition result or the second recognition result.

### BRIEF DESCRIPTION OF THE DRAWINGS

FIG. 1 is a perspective view showing an example of an article processing system according to first and second embodiments.
FIG. 2 is an enlarged perspective view of a connection portion between an article supply apparatus and an article sorting apparatus in the article processing system according to the first and second embodiments.
FIG. 3 is an enlarged top view of the connection portion between the article supply apparatus and the article sorting apparatus in the article processing system according to the first and second embodiments.
FIG. 4 is a schematic configuration diagram of a conveying system showing an example of the article processing system according to the first and second embodiments.
FIG. 5 is a block diagram showing an example of a schematic configuration of the article processing system according to the first embodiment.
FIG. 6 is a block diagram showing an example of an article supply system constituting the article processing system according to the first embodiment.
FIG. 7 is a block diagram showing an example of an article sorting system constituting the article processing system according to the first embodiment.
FIG. 8 is a flowchart showing an example of article processing by the article processing system according to the first embodiment.
FIG. 9 is a block diagram showing an example of a schematic configuration of an article processing system according to the second embodiment.
FIG. 10 is a flowchart showing an example of article processing by the article processing system according to the second embodiment.

### DETAILED DESCRIPTION

### <First and Second Embodiments>

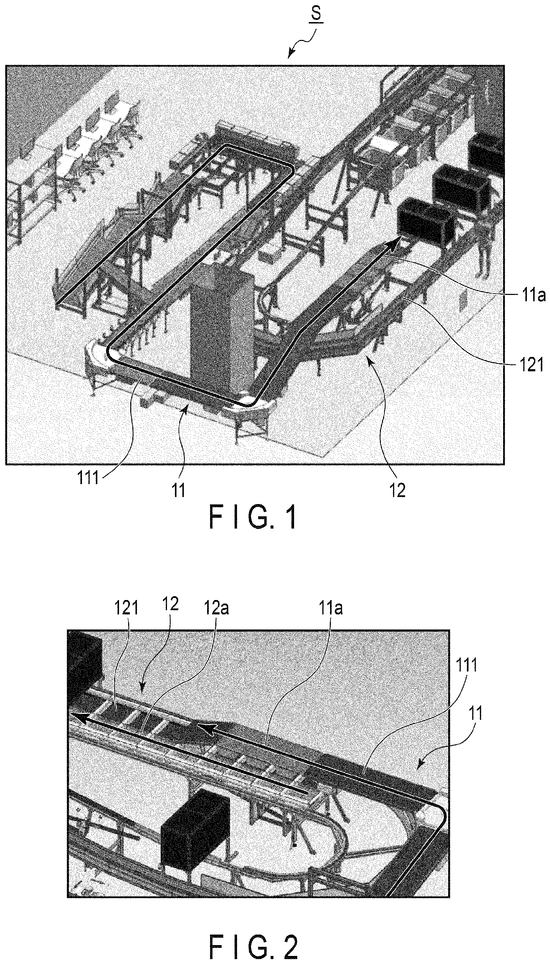

FIG. 1 is a perspective view showing an example of an article processing system according to first and second embodiments.

As shown in FIG. 1, an article processing system S includes an article supply system 11 and an article sorting system 12.

For example, the article supply system 11 includes an article supply apparatus 111 (referred to as an "autoinfeed", etc.) that conveys articles and supplies the conveyed articles to an article sorting apparatus (referred to as a "sorter", etc.), and the article supply apparatus includes a scanner that reads images of the conveyed articles. The article supply system 11 further includes a first recognition apparatus such as an optical character recognition apparatus (OCR), and a first input apparatus such as a video coding system (VCS).

The article sorting system 12 includes an article sorting apparatus 121 that conveys articles supplied from the article sorting apparatus and sorts the conveyed articles based on sorting information, and the article sorting apparatus 121 includes a scanner that reads images of the conveyed articles. The article sorting system 12 also includes a second recognition apparatus such as an OCR, and a second input apparatus such as a VSC.

Each of the article supply system 11 and the article sorting system 12 may include one or more dedicated OCRs, or the article supply system 11 or the article sorting system 12 may include one or more shared OCRs. Similarly, each of the article supply system 11 and the article sorting system 12 may include one or more dedicated VCSs, or the article supply system 11 or the article sorting system 12 may include one or more shared VSCs. This will be described in more detail below.

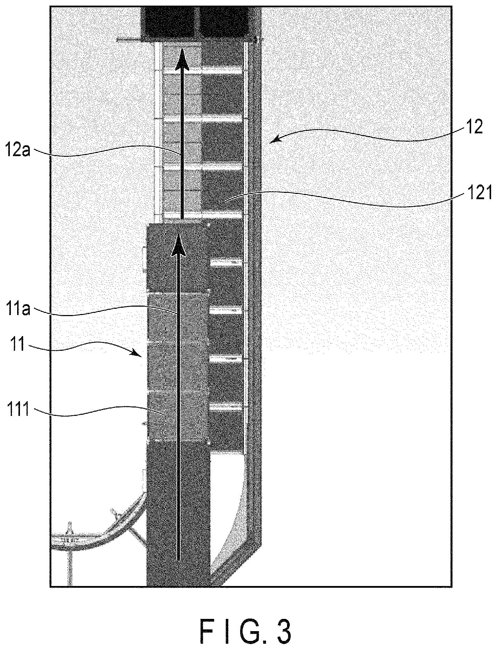

FIG. 2 is an enlarged perspective view of a connection portion between the article supply apparatus and the article sorting apparatus in the article processing system according to the first and second embodiments. FIG. 3 is an enlarged top view of a connection portion between the article supply apparatus and the article sorting apparatus in the article processing system according to the first and second embodiments.

As shown in FIG. 1 to FIG. 3, the article supply apparatus 111 of the article supply system 11 conveys articles along the arrow 11a, and the article sorting apparatus 121 of the article sorting system 12 sorts articles while conveying them along the arrow 12a.

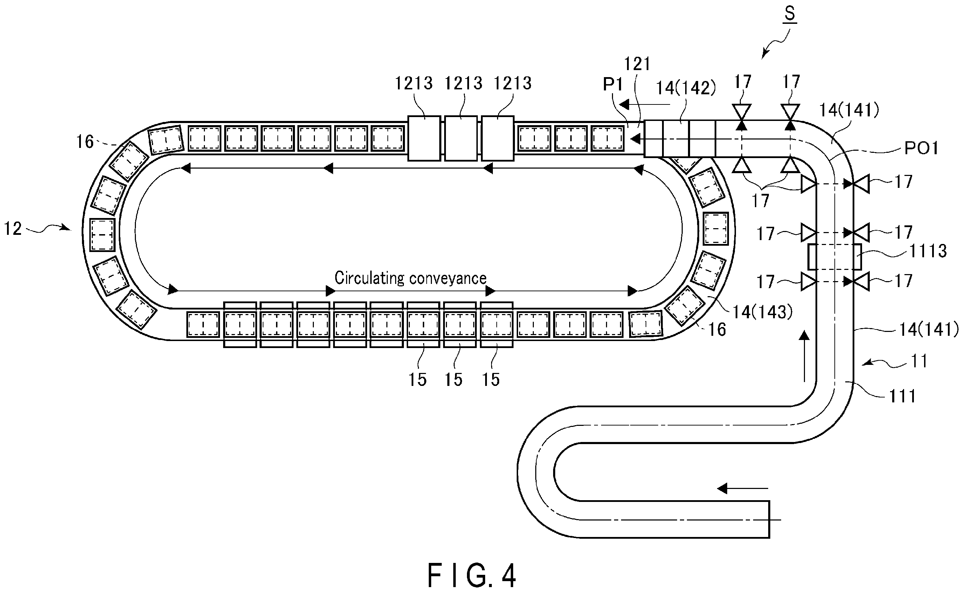

FIG. 4 is a schematic configuration diagram of a conveying system showing an example of the article processing system according to the first and second embodiments.

As shown in FIG. 4, the article processing system S includes the article supply system 11 and the article sorting system 12. The article supply system 11 includes the article supply apparatus 111, and the article supply apparatus 111 includes the scanner 1113. The article sorting system 12 includes the article sorting apparatus 121, and the article sorting apparatus 121 includes a scanner 1213.

For example, the scanner 1113 reads the first surface (for example, the back surface) of a conveyed article from the side in one direction (for example, from the lower side) of the article, and the scanner 1213 reads the second surface (for example, the front surface) of the conveyed article from the side in another direction (for example, from the upper side) of the article. The scanner 1113 may read the periphery (side surface) of the article. Alternatively, the scanner 1213 may read the periphery (side surface) of the article.

As described above, images of the back surface and the front surface of the article can be obtained by combining the reading results of the scanner 1113 and the scanner 1213. Furthermore, images of the back surface, the front surface, and the periphery of the article can be obtained by combining the reading results of the scanner 1113 and the scanner 1213.

The article supply apparatus 111 includes a conveyor 14 as a first conveyance path. For example, the article supply apparatus 111 includes a main conveyor 141 and a timing adjustment conveyor 142, and supplies articles to the article sorting apparatus 121 via the timing adjustment conveyor 142. The article supply apparatus 111 also includes a plurality of article detection sensors 17 that detect articles conveyed by the main conveyor 141 and the timing adjustment conveyor 142.

The top and bottom directions of articles supplied from the article supply apparatus 111 to the article sorting apparatus 121 remain unchanged. That is, the scanner 1113 on the upstream side of the conveyor 14 of the article processing system S always reads the first surface of an article from below the article, and the scanner 1213 on the downstream side always reads the second surface of the same article from above the article. In other words, the scanners 1113 and 1213 read images of different surfaces of the article.

The article sorting apparatus 121 includes the conveyor 14 as a second conveyance path. For example, the article sorting apparatus 121 includes a circulation conveyor 143. The article sorting apparatus 121 includes a plurality of article detection sensors 17 that detect articles conveyed by the circulation conveyor 143.

Furthermore, the article sorting apparatus 121 includes a plurality of sorting chutes 15 corresponding to a plurality of sorting destinations, and a tray 16 configured to feed articles to each of the sorting chutes 15. The tray 16 is conveyed by the circulation conveyor 143, and when the tray 16 reaches a position corresponding to a target sorting chute 15, the bottom portion of the tray 16 is opened and an article placed thereon is dropped into the target sorting chute 15.

### <First Embodiment>

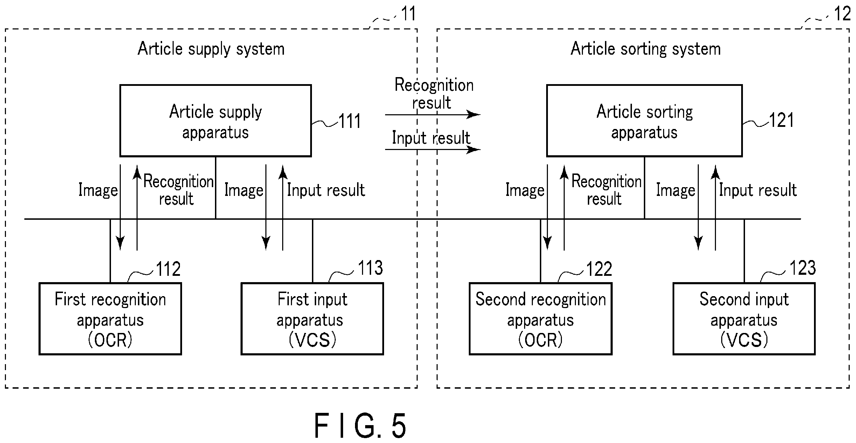

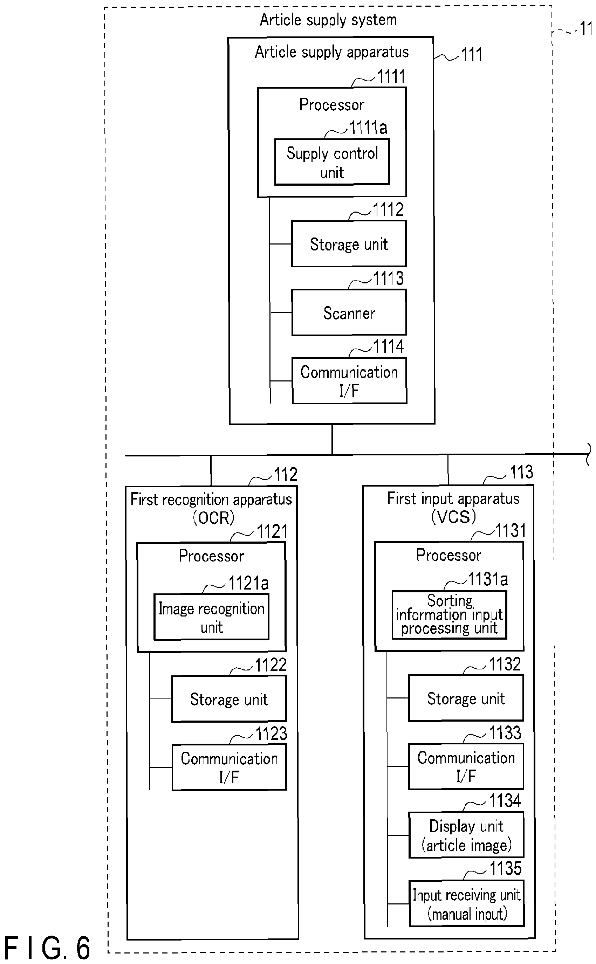

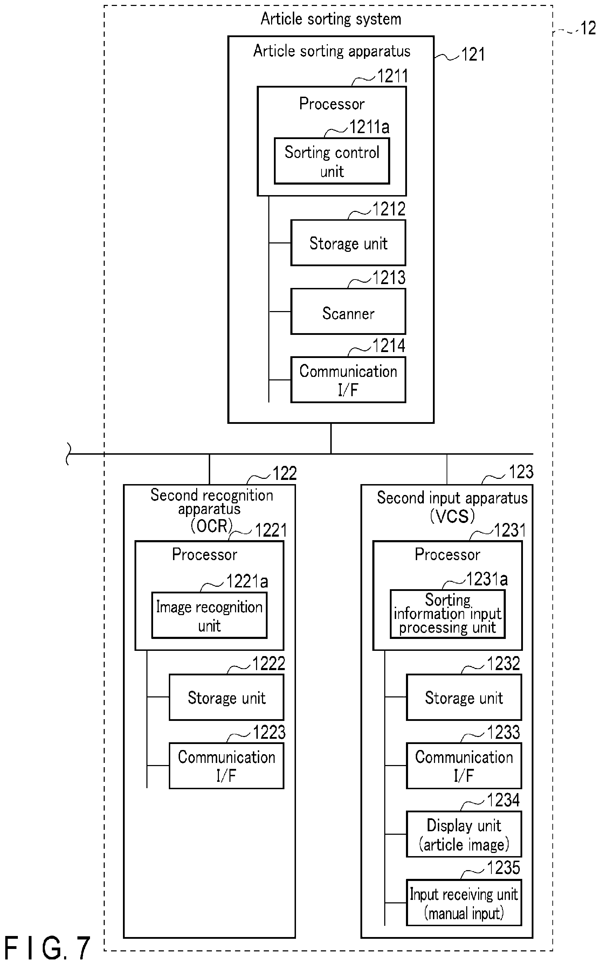

FIG. 5 is a block diagram showing an example of a schematic configuration of the article processing system according to the first embodiment. FIG. 6 is a block diagram showing an example of the article supply system constituting the article processing system according to the first embodiment. FIG. 7 is a block diagram showing an example of the article sorting system constituting the article processing system according to the first embodiment.

As shown in FIG. 5 and FIG. 6, the article supply system 11 includes the article supply apparatus 111, an OCR 112 serving as the first recognition apparatus, and a VCS 113 as a first input apparatus. As shown in FIG. 5 and FIG. 7, the article sorting system 12 includes the article sorting apparatus 121, an OCR 122 serving as the second recognition apparatus, and a VCS 123 serving as the second input apparatus.

The article supply apparatus 111 conveys articles and supplies them to the article sorting apparatus 121. The article sorting apparatus 121 sorts articles based on sorting information of the articles supplied from the article supply apparatus 111.

The OCR 112 receives an image of an article read by the scanner of the article supply apparatus 111, and recognizes sorting information such as a bar code, a zip code, and an address from the image. In the case where the OCR 112 fails to recognize the sorting information, the VCS 113 receives the image of the article read by the scanner of the article supply apparatus 111, displays the image to an operator, and receives sorting information input by the operator who views the image.

The OCR 122 receives an image of an article read by the scanner of the article sorting apparatus 121 and recognizes sorting information such as a bar code, a zip code, and an address from the image. In the case where the OCR 122 fails to recognize the sorting information, the VCS 123 receives the image of the article read by the scanner of the article sorting apparatus 121, displays the image to an operator, and receives sorting information input by the operator who views the image.

Hereinafter, configurations of the article supply apparatus 111, the OCR 112, and the VCS 113 will be described in detail with reference to FIG. 6.

The article supply apparatus 111 includes a processor 1111, a storage unit 1112, a scanner 1113, and a communication interface (I/F) 1114.

The processor 1111 corresponds to a central portion of a computer that performs processing such as calculation and control necessary for supplying articles. The processor 1111 executes control to realize various functions based on a program such as system software, application software, or firmware stored in the storage unit 1112. The processor 1111 is, for example, a central processing unit (CPU), a micro processing unit (MPU), or a digital signal processor (DSP). Alternatively, the processor 1111 is a combination of these. Hereinafter, several processors will be described; however, the above applies to all of them.

The processor 1111 includes a supply control unit 1111a, and the supply control unit 1111a controls supply of articles. The processor 1111 operates based on a program stored in the storage unit 1112 and realizes the function of the supply control unit 1111a. Based on each of the article detection signals from the plurality of article detection sensors 17 of the article supply apparatus 111, the processor 1111 assigns an article detection ID to each detected article, traces the conveyance (movement) of each article, and detects or estimates a position in which each article is located. Furthermore, the processor 1111 transfers the assigned article detection ID to the article sorting apparatus 121, and information on each article (such as information on a detected or estimated position) is shared between the article supply apparatus 111 and the article sorting apparatus 121.

The storage unit 1112 is a non-transitory computer-readable storage medium and stores a program executed by the processor 1111. The storage unit 1112 stores data, various setting values, etc., for use by the processor 1111 to perform various types of processing. The article supply apparatus 111 is transferred in a state where a program is stored in the storage unit 1112. Alternatively, the article supply apparatus 111 may read a program stored in the non-transitory computer-readable storage medium and write the read program to the storage unit 1112 after the article supply apparatus 111 is transferred. The non-transitory computer-readable storage medium is, for example, a removable storage medium such as a magnetic disk, a magneto-optical disk, an optical disk, or a semiconductor memory. Alternatively, the program may be downloaded via a network, etc., and written into the storage unit 1112.

The scanner 1113 reads an image of a conveyed article and outputs the image. For example, the scanner 1113 reads the first surface (for example, the back surface) of a conveyed article from the side in one direction (for example, from the lower side) of the article and outputs an image of the article. The scanner 1113 is not limited to reading of the back surface of the article, and may read one or more other surfaces of the article and output the read image.

The communication interface 1114 is an interface for communicating with another apparatus via a network, etc., in a wired or wireless manner, receiving various types of information transmitted from another apparatus, and transmitting various types of information to another apparatus. The communication interface 1114 communicates with the OCR 112, the VCS 113, the article sorting apparatus 121, etc. For example, the communication interface 1114 transmits an image read by the scanner 1113 to the OCR 112.

The OCR 112 includes a processor 1121, a storage unit 1122, and a communication interface 1123.

The processor 1121 corresponds to a central portion of a computer that performs processing such as calculation necessary for image recognition. The processor 1121 executes control to realize various functions based on a program stored in the storage unit 1122. The processor 1121 is, for example, a CPU. The processor 1121 includes an image recognition unit 1121a, and the image recognition unit 1121a recognizes sorting information from an image read by the scanner 1113, generates a recognition result, and outputs the recognition result. The processor 1121 operates based on a program stored in the storage unit 1122, and realizes the function of the image recognition unit 1121a.

The storage unit 1122 is a non-transitory computer-readable storage medium and stores a program executed by the processor 1121. The storage unit 1122 stores data, various setting values, etc., for use by the processor 1121 to perform various types of processing.

The communication interface 1123 is an interface for communicating with another apparatus via a network, etc., in a wired or wireless manner, receiving various types of information transmitted from another apparatus, and transmitting various types of information to another apparatus. The communication interface 1123 communicates with the article supply apparatus 111, etc. For example, the communication interface 1123 receives an image transmitted from the article supply apparatus 111 and transmits a recognition result to the article supply apparatus 111.

The VCS 113 includes a processor 1131, a storage unit 1132, a communication interface 1133, a display unit 1134, and an input receiving unit 1135.

The processor 1131 corresponds to a central portion of a computer that performs processing such as calculation necessary for manual input processing for receiving input of sorting information in correspondence with a display image. The processor 1131 executes control to realize various functions based on the program stored in the storage unit 1132. The processor 1131 is, for example, a CPU. The processor 1131 includes a sorting information input processing unit 1131a, and the sorting information input processing unit 1131a receives sorting information input from the input receiving unit 1135 in correspondence with an image displayed by the display unit 1134, and outputs the received input result (sorting information). The processor 1131 operates based on the program stored in the storage unit 1132, and realizes the function of the sorting information input processing unit 1131a.

The storage unit 1132 is a non-transitory computer-readable storage medium and stores a program executed by the processor 1131. The storage unit 1132 stores data, various setting values, etc., for use by the processor 1131 to perform various types of processing.

The communication interface 1133 is an interface for communicating with another apparatus via a network, etc., in a wired or wireless manner, receiving various types of information transmitted from another apparatus, and transmitting various types of information to another apparatus. The communication interface 1133 communicates with the article supply apparatus 111, etc. For example, the communication interface 1133 receives an image transmitted from the article supply apparatus 111 and transmits the input sorting information to the article supply apparatus 111.

The display unit 1134 displays, with respect to an operator, an image of the article received via the communication interface 1133. The input receiving unit 1135 is a keyboard, etc., and receives a manual input of sorting information from the operator who views the display unit 1134.

Hereinafter, the configuration of the article sorting apparatus 121 will be described in detail with reference to FIG. 7.

The article sorting apparatus 121 includes a processor 1211, a storage unit 1212, a scanner 1213, and a communication interface 1214.

The processor 1211 corresponds to a central portion of a computer that performs processing such as calculation and control necessary for sorting articles. The processor 1211 executes control to realize various functions based on a program stored in the storage unit 1212. The processor 1211 is, for example, a CPU.

The processor 1211 includes a sorting control unit 1211a, and the sorting control unit 1211a controls sorting of articles. The processor 1211 operates based on a program stored in the storage unit 1212 and realizes the function of the sorting control unit 1211a. Based on each of the article detection signals from the plurality of article detection sensors 17 of the article sorting apparatus 121, the processor 1211 traces the conveyance of each article, and detects or estimates a position in which each article is located.

The storage unit 1212 is a non-transitory computer-readable storage medium and stores a program executed by the processor 1211. The storage unit 1212 stores data, various setting values, etc., for use by the processor 1111 to perform various types of processing. The article sorting apparatus 121 is transferred in a state where the program is stored in the storage unit 1212. Alternatively, after the article sorting apparatus 121 is transferred, the article sorting apparatus 121 may read a program stored in the non-transitory computer-readable storage medium and write the read program to the storage unit 1212. The non-transitory computer-readable storage medium is, for example, a removable storage medium such as a magnetic disk, a magneto-optical disk, an optical disk, or a semiconductor memory. Alternatively, the program may be downloaded via a network, etc., and written into the storage unit 1212.

The scanner 1213 reads an image of the conveyed article and outputs the image. For example, the scanner 1213 reads the second surface (for example, a front surface) of the conveyed article from the side in another direction (for example, from the upper side) of the article, and outputs an image of the article. In the case of using the scanner 1113 configured to read the first surface of the article in combination with the scanner 1213 configured to read the second surface of the article, these scanners are scanners for reading images on different surfaces of the article. The scanner 1213 is not limited to reading of the front surface of the article, and may read one or more other surfaces of the article and output the read image.

The communication interface 1214 is an interface for communicating with another apparatus via a network, etc., in a wired or wireless manner, receiving various types of information transmitted from another apparatus, and transmitting various types of information to another apparatus. The communication interface 1214 communicates with the OCR 122, the VCS 123, the article supply apparatus 111, etc. For example, the communication interface 1214 transmits an image read by the scanner 1213 to the OCR 122.

The OCR 122 includes a processor 1221, a storage unit 1222, and a communication interface 1223, and the processor 1221 includes an image recognition unit 1221a. The configuration of the OCR 122 is substantially identical to the configuration of the OCR 112 and will not be described in detail. The OCR 122 receives an image transmitted from the article sorting apparatus 121, and transmits a recognition result to the article sorting apparatus 121.

The VCS 123 includes a processor 1231, a storage unit 1232, a communication interface 1233, a display unit 1234, and an input receiving unit 1235, and the processor 1231 includes a sorting information input processing unit 1231a. The configuration of the VCS 123 is substantially identical to the configuration of the VCS 113 and will not be described in detail. The VCS 123 receives an image transmitted from the article sorting apparatus 121 and transmits sorting information input from an operator to the article sorting apparatus 121.

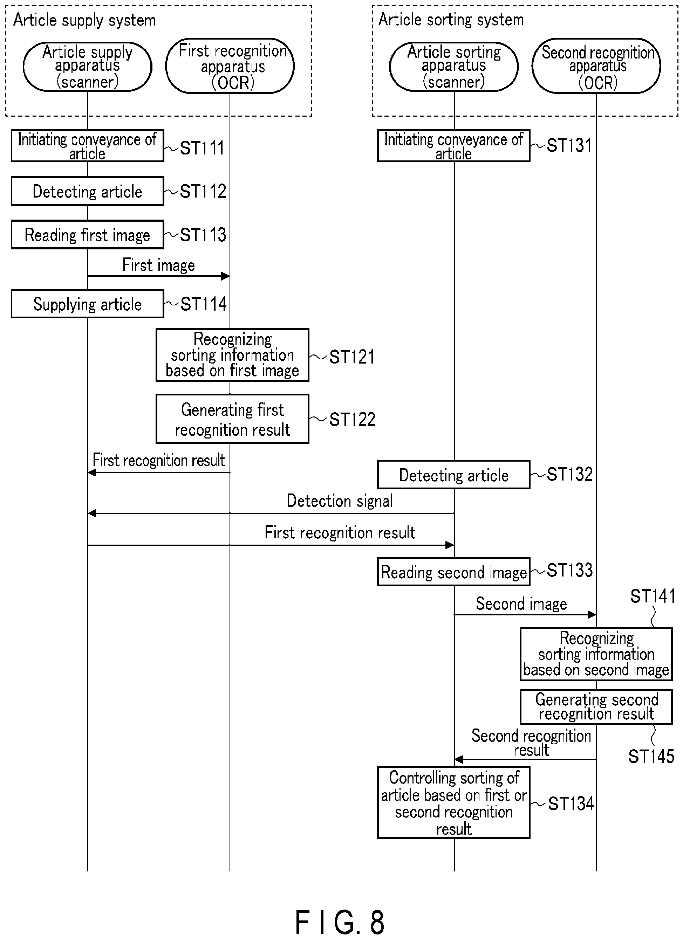

FIG. 8 is a flowchart showing an example of article processing by the article processing system according to the first embodiment.

The article supply apparatus 111 initiates conveyance of a loaded article (ST111) and supplies the article to the article sorting apparatus 121. The article sorting apparatus 121 initiates conveyance of articles supplied from the article supply apparatus 111 (ST131).

For example, the article supply apparatus 111 separates a plurality of loaded articles one by one and conveys the articles at regular intervals. The article detection sensor 17 of the article supply apparatus 111 detects a conveyed article (ST112) and outputs an article detection signal. Based on the article detection signal, the processor 1111 assigns an article detection ID to the detected article and traces the conveyed article.

The scanner 1113 reads the first surface (for example, the back surface) of the conveyed article from the side in one direction (for example, from the lower side) based on the article detection signal (ST113), the storage unit 1112 stores the first image in association with the article detection ID, and the communication interface 1114 outputs the first image to the OCR 112. The article supply apparatus 111 supplies articles to the article sorting apparatus 121 via the main conveyor 141 and the timing adjustment conveyor 142 (ST114).

The OCR112 receives the first image via the communication interface 1123, and the processor 1121 (image recognition unit 1121a) attempts to recognize sorting information from the first image (ST121). For example, the storage unit 1122 stores a database of sorting information (address information), and the processor 1121 compares the database with the recognized information to verify the recognition accuracy. The processor 1121 determines recognition success in the case where a recognition accuracy exceeding a reference value is obtained, and determines recognition failure in the case where only a recognition accuracy equal to or less than the reference value is obtained. In the case of a successful recognition, the communication interface 1123 generates a first recognition result including recognized sorting information and outputs the first recognition result to the article supply apparatus 111 (ST122). Furthermore, in the case of recognition failure, the communication interface 1123 does not output the first recognition result, but outputs a recognition error instead.

The article supply apparatus 111 receives the first recognition result output from the OCR 112, and the storage unit 1112 stores the first image and the first recognition result in association with the article detection ID. Alternatively, the article supply apparatus 111 receives a recognition error output from the OCR 112, and the storage unit 1112 stores the first image and the recognition error in association with the article detection ID.

The article sorting apparatus 121 conveys articles supplied from the article supply apparatus 111 by the circulation conveyor 143. The article detection sensor 17 of the article sorting apparatus 121 detects the conveyed article and outputs an article detection signal (ST132). The communication interface 1214 notifies the article supply apparatus 121 of the article detection signal. The article supply apparatus 121 outputs the article detection ID and the first recognition result stored in the storage unit 1112 to the article supply apparatus 111 using the article detection signal from the article sorting apparatus 121 as a trigger. The article sorting apparatus 121 receives the article detection ID and the first recognition result output from the article supply apparatus 111, and the storage unit 1212 stores the article detection ID and the first recognition result.

In addition, the scanner 1213 of the article sorting apparatus 121 reads the second surface (for example, the back surface) of the conveyed article from the side in another direction (for example, from the lower side) based on the article detection signal (ST133), the storage unit 1212 stores the second image in association with the article detection ID, and the communication interface 1214 outputs the second image to the OCR 122.

The OCR 122 receives the second image via the communication interface 1223, and the processor 1221 (the image recognition unit 1221a) attempts to recognize sorting information from the second image (ST141). For example, the storage unit 1222 stores a database of sorting information (address information), and the processor 1221 compares the database with the recognized information to verify the recognition accuracy. The processor 1221 determines recognition success in the case where a recognition accuracy exceeding a reference value is obtained, and determines recognition failure in the case where only a recognition accuracy equal to or less than the reference value is obtained. In the case of a successful recognition, the communication interface 1223 generates a second recognition result including the recognized sorting information and outputs the second recognition result to the article sorting apparatus 121 (ST145). Furthermore, in the case in which the recognition fails, the communication interface 1223 does not output the second recognition result, but outputs a recognition error instead.

The article sorting apparatus 121 receives the second recognition result output from the OCR 122, and the storage unit 1212 stores the second image and the second recognition result in association with the article detection ID. Alternatively, the article supply apparatus 111 receives a recognition error output from the OCR 122, and the storage unit 1212 stores the second image and the recognition error in association with the article detection ID. The processor 1211 controls sorting of articles based on the first or second recognition result stored in the storage unit 1212 (ST134).

The above described a case in which the second recognition result is generated regardless of whether the first recognition result is generated or not. However, processing for obtaining the second recognition result may be omitted in the case where the first recognition result is generated. That is, in the case where the article sorting apparatus 121 receives the article detection ID and the first recognition result, the processor 1211 may omit reading of the second surface by the scanner 1213, stop outputting of the second image by the communication interface 1214, or omit the recognition processing of the second image by the OCR 122. That is, in the case where the article detection ID and the first recognition result are stored in the storage unit 1212, the processor 1211 controls sorting of articles based on the first recognition result stored in the storage unit 1212. This enables resources of the OCR 122 to be allocated to another recognition processing, so that the improvement in performance of the entire system can be expected.

For example, in the case where sorting information is given to the first surface of the article, sorting information is not given to the second surface, recognition of sorting information based on the first image read from the first surface is successful, and the first recognition result is obtained, the processor 1211 controls sorting of articles based on the first recognition result stored in the storage unit 1212.

In the case where sorting information is not given to the first surface of the article, sorting information is given to the second surface, recognition of the sorting information based on the second image read from the second surface is successful, and the second recognition result is obtained, the processor 1211 controls sorting of articles based on the second recognition result stored in the storage unit 1212.

In the case where sorting information is given to both the first surface and the second surface, and the first and second recognition results are obtained, the processor 1211 controls sorting of articles based on the first or second recognition result based on the priority set in advance.

Herein, use of the VCS 113 will be additionally described. In the case of receiving a recognition error from the OCR 112, the article supply apparatus 111 may transfer the first image stored in the storage unit 1112 to the VCS 113 and use the VCS 113.

The VCS 113 receives the first image via the communication interface 1133, and the display unit 1134 displays the first image. An operator visually checks the first image displayed on the display unit 1134, and inputs, if he or she can recognize sorting information, the sorting information via the input receiving unit 1135 such as a keyboard. The input receiving unit 1135 receives input of the sorting information, and the display unit 1134 displays the input sorting information. The communication interface 1133 outputs a first input result including the input sorting information to the article supply apparatus 111.

The article supply apparatus 111 receives the first input result including the sorting information via the communication interface 1114, and the storage unit 1112 stores the first image and the first input result in association with the article detection ID. In such a case, the article supply apparatus 111 outputs the article detection ID and the first input result stored in the storage unit 1112 to the article supply apparatus 111 using the article detection signal from the article sorting apparatus 121 (ST132) as a trigger. In the subsequent processing, the first input result is used instead of the first recognition result.

Furthermore, use of the VCS 123 will be additionally described. In the case of receiving the recognition error from the OCR 122, the article sorting apparatus 121 may transfer the second image stored in the storage unit 1212 to the VCS 123 and use the VCS 123.

The VCS 123 receives the second image via the communication interface 1233, and the display unit 1234 displays the second image. An operator visually checks the second image displayed on the display unit 1234, and inputs, if he or she can recognize sorting information, the sorting information via the input receiving unit 1235 such as a keyboard. In response to the input receiving unit 1235 receiving the sorting information, the display unit 1234 displays the input sorting information. The communication interface 1233 outputs a second input result including the input sorting information to the article sorting apparatus 121.

The article sorting apparatus 121 receives a second input result including the sorting information via the communication interface 1214, and the storage unit 1212 stores the second image and the second input result in association with the article detection ID. In the subsequent processing, the second input result is used instead of the second recognition result.

According to the first embodiment, the introduction cost of the article supply system can be suppressed by utilizing the scanner 1213 of the article sorting system. For example, installation of the scanner 1113 that reads the first surface (for example, the front surface) of an article with respect to the installation of the scanner 1213 that reads the second surface (for example, the back surface) of the article enables reading of both surfaces (the first surface and the second surface) of the article, so that the probability of acquiring the sorting information can be increased. Furthermore, in the case where one of the scanners 1113 and 1213 reads the periphery (side surface) of the article, the probability of acquiring the sorting information can be further increased. Therefore, the sorting information can be recognized from the article regardless of the orientation of the article loaded into the article supply apparatus 111.

Furthermore, by storing the first image of the article read by the scanner 1113 in the conveyance process of the article supply system 11 in association with the article detection ID and storing the second image of the article read by the scanner 1213 in the conveyance process of the article sorting system 12 in association with the article detection ID, articles handled by the two systems can be more reliably managed. In a large-scale distribution warehouse in which a large number of pieces of cargo are handled, many people enter and leave the warehouse, and article management is important. If the first image is stored in association with a predetermined article detection ID, the fact that the article of the first image has been handled in the article supply system 11 remains as a record. Furthermore, if the second image is stored in association with the predetermined article detection ID, the fact that the article of the second image has been handled in the article sorting system 12 remains as a record. With these records, handling of articles can be more reliably managed.

### <Second Embodiment>

The first embodiment described the case in which the article supply system 11 includes the OCR 112 and the VCS 113, the article sorting system 12 includes the OCR 122 and the VCS 123, the article supply system 11 executes the recognition processing or the input processing of the sorting information, and the article sorting system 12 also executes the recognition processing or the input processing of the sorting information.

In a second embodiment, a case will be described in which the article sorting system 12 includes the OCR 122 and the VCS 123, and the article sorting system 12 executes the recognition processing or the input processing of the sorting information. The article supply system 11 transmits the image read by the scanner to the article sorting system 12, and uses the OCR 122 and the VCS 123 of the article sorting system 12.

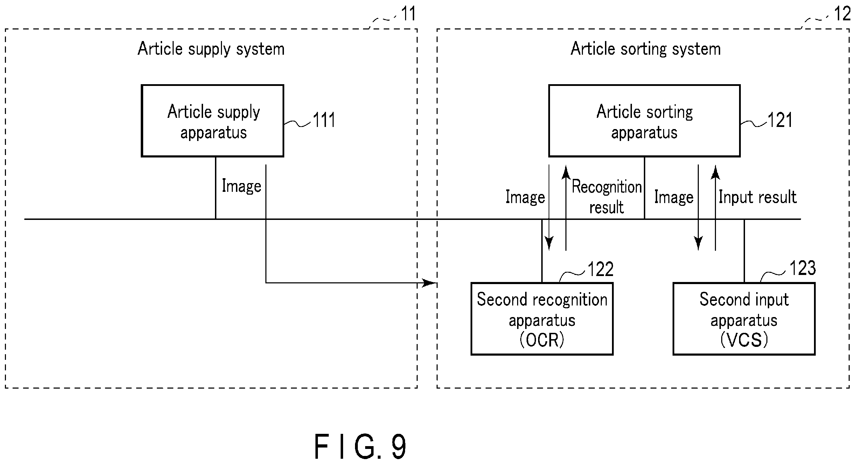

FIG. 9 is a block diagram showing an example of a schematic configuration of the article processing system according to the second embodiment. The article supply apparatus 111 included in the article processing system according to the second embodiment is the same as the article supply apparatus 111 shown in FIG. 6, and a detailed description thereof will be omitted. The article sorting apparatuses 121, the OCR 122, and the VCS 123 included in the article processing system according to the second embodiment are also the same as the article sorting apparatuses 121, the OCR 122, and the VCS 123 shown in FIG. 7, and a detailed description thereof will be omitted.

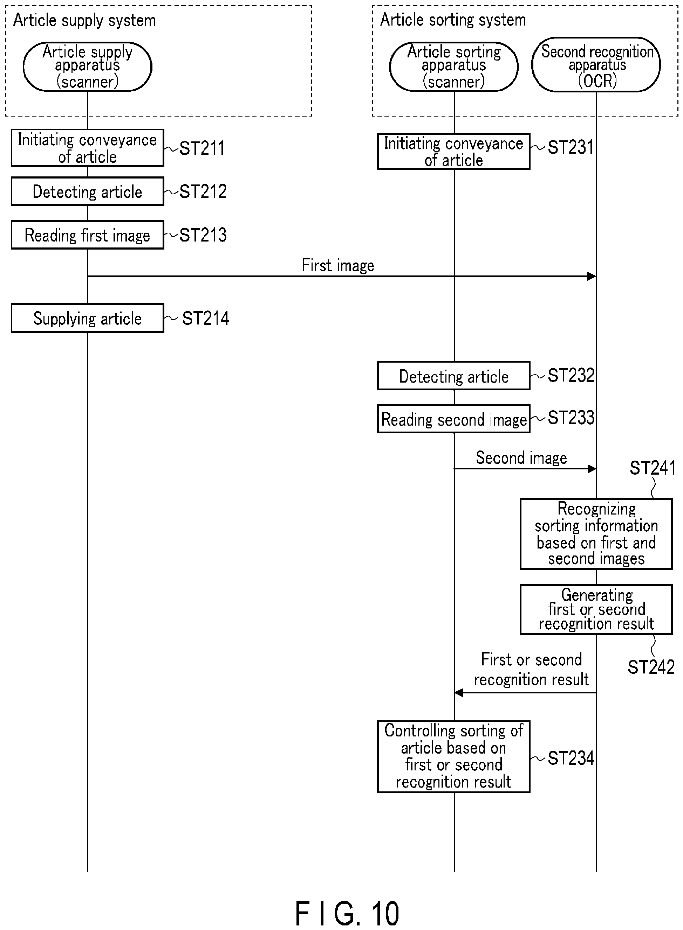

FIG. 10 is a flowchart showing an example of article processing by the article processing system according to the second embodiment.

The article supply apparatus 111 initiates conveyance of a loaded article (ST211) and supplies the article to the article sorting apparatus 121. The article sorting apparatus 121 initiates conveyance of the article supplied from the article supply apparatus 111 (ST231).

For example, the article supply apparatus 111 separates a plurality of loaded articles one by one and conveys the articles at regular intervals. The article detection sensor 17 of the article supply apparatus 111 detects the conveyed article (ST212) and outputs an article detection signal. Based on the article detection signal, the processor 1111 assigns an article detection ID to the detected article and tracks the conveyed article.

The scanner 1113 reads the first surface (for example, the back surface) of the conveyed article from the side in one direction (for example, from the lower side) based on the article detection signal (ST213), the storage unit 1112 stores the first image in association with the article detection ID, and the communication interface 1114 outputs the first image to the OCR 122. The article supply apparatus 111 supplies articles to the article sorting apparatus 121 via the main conveyor 141 and the timing adjustment conveyor 142 (ST214).

The article sorting apparatus 121 conveys articles supplied from the article supply apparatus 111 by the circulation conveyor 143. The article detection sensor 17 of the article sorting apparatus 121 detects the conveyed article and outputs an article detection signal (ST232). The scanner 1213 of the article sorting apparatus 121 reads the second surface (for example, the back surface) of the conveyed article from the side in another direction (for example, from the lower side) based on the article detection signal (ST233), the storage unit 1112 stores the second image in association with the article detection ID, and the communication interface 1114 outputs the second image to the OCR122.

The OCR 122 receives the first and second images via the communication interface 1223, and the processor 1221 (the image recognition unit 1221a) attempts to recognize sorting information from the first and second images (ST241). In the case where the recognition based on the first image is successful, the communication interface 1223 generates a first recognition result including the recognized sorting information and outputs the first recognition result to the article sorting apparatus 121 (ST242). In the case where the recognition based on the first image fails, the communication interface 1223 may output the first image and the first recognition error instead of outputting the first recognition result. In the case where the recognition based on the second image is successful, the communication interface 1223 generates a second recognition result including the recognized sorting information and outputs the second recognition result to the article sorting apparatus 121 (ST242). In the case where the recognition based on the second image fails, the communication interface 1223 may output the second image and the second recognition error instead of outputting the second recognition result.

The article sorting apparatus 121 receives the first recognition result output from the OCR 122, and the storage unit 1212 stores the first recognition result in association with the article detection ID. Alternatively, the article sorting apparatus 121 receives a first image and a recognition error output from the OCR 122, and the storage unit 1212 stores the first image and the recognition error in association with the article detection ID.

Alternatively, the article sorting apparatus 121 receives a second recognition result output from the OCR 122, and the storage unit 1212 stores the second image and the second recognition result in association with the article detection ID. Alternatively, the article supply apparatus 111 receives a recognition error output from the OCR 122, and the storage unit 1212 stores a second image and the recognition error in association with the article detection ID.

The processor 1211 controls sorting of articles based on the first or second recognition result stored in the storage unit 1212 (ST234).

For example, in the case where sorting information is given to the first surface of the article, sorting information is not given to the second surface, recognition of sorting information based on the first image read from the first surface is successful, and the first recognition result is obtained, the processor 1211 controls sorting of articles based on the first recognition result stored in the storage unit 1212.

In the case where sorting information is not given to the first surface of the article, sorting information is given to the second surface, recognition of the sorting information based on the second image read from the second surface is successful, and the second recognition result is obtained, the processor 1211 controls sorting of articles based on the second recognition result stored in the storage unit 1212.

Meanwhile, in the case where the recognition processing based on the first and second images is executed in the ST241 so that sorting information is given to both the first surface and the second surface and the first and second recognition results are obtained, the processor 1211 can control sorting of articles based on the first or second recognition result based on the priority set in advance. Furthermore, the processor 1211 can give a priority to one of the first and second images, which includes a keyword such as a destination set in advance, thereby being able to control sorting of articles based on the recognition result of the image to which the priority is given.

Herein, use of the VCS 123 will be additionally described. The article sorting apparatus 121 may transfer the first and second images to the OCR 122 to use the VCS 123 in the case of receiving the first and second recognition errors from the VCS 123 during the recognition processing for the first and second images.

The VCS 123 receives the first and second images via the communication interface 1133, and the display unit 1234 displays the first and second images side by side. An operator visually checks the first and second images displayed on the display unit 1234, and inputs, if he or she can recognize sorting information from at least one of the first and second images, the sorting information via the input receiving unit 1235 such as a keyboard. The input receiving unit 1235 receives input of the sorting information, and the display unit 1234 displays the input sorting information. The communication interface 1233 outputs an input result including the input sorting information to the article sorting apparatus 121. By the display unit 1234 displaying the first and second images read from the same article side by side, the efficiency of recognition work of the sorting information by an operator can be improved.

The article sorting apparatus 121 receives the input result including sorting information via the communication interface 1214, and the storage unit 1112 stores the first image, the second image, and the input result in association with the article detection ID. In the subsequent processing, the input result is used instead of the first or second recognition result.

According to the second embodiment, in addition to the effect of the first embodiment, the introduction cost of the OCR and the VCS can be suppressed. In the case of adding the article supply system 11, the reduction in cost for adding the article supply system 11 can be achieved by the article supply system 11 using the OCR 122 and the VCS 123 of the article sorting system 12. The above description assumed a case in which the VCS 123 is operated on the article sorting system 12 side; however, the VCS 123 may be operated from the article supply system 11.

As described above, according to the article processing system of the first and second embodiments, both cost reduction and performance improvement can be achieved.

While several embodiments have been described, these embodiments have been presented by way of example and are not intended to limit the scope of the invention. This novel embodiment may be embodied in various forms, and various omissions, replacements, and changes can be made thereon without departing from the spirit of the invention. The embodiments and modifications are included in the scope of the claimed inventions and their equivalents.

## Claims

1. An article supply system, comprising an article supply apparatus and a first recognition apparatus,
wherein the article supply apparatus reads a first image from a first surface of an article conveyed by a first conveyance path, outputs the first image, and supplies the article to an article sorting apparatus,
the first recognition apparatus recognizes sorting information based on the first image and outputs a first recognition result including the recognized sorting information, and
the article sorting apparatus causes a second conveyance path to convey the article supplied from the article supply apparatus, reads a second image from a second surface of the conveyed article, receives the first recognition result or a second recognition result including sorting information recognized from the second image, and controls sorting of the article based on the first recognition result or the second recognition result.

2. An article processing system comprising an article supply system and an article sorting system,
wherein the article supply system includes:
an article supply apparatus configured to read a first image from a first surface of an article conveyed by a first conveyance path, output the first image, and supply the article to an article sorting apparatus; and
a first recognition apparatus configured to recognize sorting information based on the first image and output a first recognition result including the sorting information, and
the article sorting system includes:
an article sorting apparatus configured to cause a second conveyance path to convey the article supplied from the article supply apparatus, read a second image from a second surface of the conveyed article, output the second image, receive the first recognition result or a second recognition result including sorting information recognized from the second image, and control sorting of the article based on the first recognition result or the second recognition result; and
a second recognition apparatus configured to recognize sorting information based on the second image and output the second recognition result including the recognized sorting information.

3. The article processing system according to claim 2, wherein the first recognition apparatus outputs the first recognition result in a case where recognition of the sorting information is successful, and does not output the first recognition result in a case where recognition of the sorting information fails.

4. The article processing system according to claim 3, wherein the article sorting apparatus controls sorting of the article based on the first recognition result in a case of receiving the first recognition result output from the first recognition apparatus, and controls sorting of the article based on the second recognition result in a case of not receiving the first recognition result.

5. An article processing system comprising an article supply system and an article sorting system, wherein
the article supply system includes an article supply apparatus configured to read a first image from a first surface of an article conveyed by a first conveyance path, output the first image, and supply the article to an article sorting apparatus, and
the article sorting system includes:
an article sorting apparatus configured to cause a second conveyance path to convey the article supplied from the article supply apparatus, read a second image from a second surface of the conveyed article, output the second image, and control sorting of the article conveyed by the second conveyance path based on a first recognition result based on the first image or a second recognition result based on the second image; and
a recognition apparatus configured to recognize sorting information based on the first image and output the first recognition result including the recognized sorting information to the article sorting apparatus, and to recognize sorting information based on the second image and output the second recognition result including the recognized sorting information to the article sorting apparatus.

6. The article processing system according to claim 5, further comprising an input apparatus configured to display the first and second images to an operator and receive sorting information input by the operator.

7. The article processing system according to claim 6, wherein the article sorting apparatus controls sorting of the article based on sorting information indicated by the first recognition result, sorting information indicated by the second recognition result, or sorting information input by the operator.
